Europäisches Patentamt

European Patent Office

Office européen des brevets

(19)

(11) Publication number: **0 473 855 A1**

(12) **EUROPEAN PATENT APPLICATION**

(21) Application number: **90313297.5**

(22) Date of filing: **07.12.90**

(51) Int. Cl.5: **C04B 35/00**, C04B 41/50

(30) Priority: **09.08.90 US 565374**

(43) Date of publication of application:
**11.03.92 Bulletin 92/11**

(84) Designated Contracting States:
**AT BE CH DE ES FR GB IT LI LU NL SE**

(71) Applicant: **Ogura, Atsushi**
**14-30 Yukinoshita 2-chome**
**Kamakura-shi Kanagawa-ken 248(JP)**

(72) Inventor: **Ogura, Atsushi**
**14-30 Yukinoshita 2-chome**
**Kamakura-shi Kanagawa-ken 248(JP)**

(74) Representative: **Jump, Timothy John Simon et al**
**VENNER, SHIPLEY & CO. 368 City Road**
**London EC1V 2OA(GB)**

(54) **Non-ferrous metal oxide ceramic composite powder and method of manufacturing the same.**

(57) A metal oxide ceramic composite powder comprises crystals of a reacted and precipitated non-ferrous metal oxide distributed on fine particles of a ceramic material. The metal oxide is derived from an aqueous solution of a non-ferrous metal chloride which, in the presence of a magnetic field, forms a complex ion solution. The complex ion may comprise a proportional blend of non-ferrous metallic and semi-metallic elements to produce specific properties. The complex ion is reacted and precipitated with an alkaline material to deposit a high purity non-ferrous metal oxide on the ceramic material. Each ceramic particle, thus, has a uniform coating of a high purity non-ferrous metal oxide deposited thereon.

FIGURE

This invention relates to a non-ferrous metal oxide ceramic composite powder and a method of manufacturing the same.

Ceramics have melting points higher than those of metals, and sintering or melting a powdery ceramic material to manufacture a ceramic product requires heating at high temperatures. In an effort to solve such a problem, studies have been undertaken to produce a ceramic product by sintering super-fine ceramic particles having a grain size on the order of an angstrom unit. However, a satisfactory method of manufacturing such a ceramic product has not yet been developed. Further, in order to manufacture a multicomponent composite product having a sufficiently homogeneous microstructure, it is necessary to sufficiently homogeneously blend a number of different components, such as metal or semi-metal oxides. However, homogeneous blending of fine particles of such components has been physically difficult. Accordingly, it has been difficult to obtain a composite product in which the fine particles of the components are sufficiently homogeneously and perfectly blended to achieve the desired physical properties and functional requirements.

Ferrites and other metal oxides, which have excellent magnetic and other desirable characteristics, are widely used in various kinds of electromagnetic, semiconductor and other types of devices. However, to produce such devices requires thorough blending of impurity-free components at a predetermined composition ratio. Consequently, production of devices using such high purity ferrites and other metal oxides capable of sufficiently exhibiting the desired characteristics has been both difficult and expensive to achieve. Devices have been produced by sintering a ferrite-ceramic composite powder of the type described in published European Patent application No. 0221765, using a method as described in published European Patent application No. 225176.

With a view to solving the prior art problems discussed above, it is an object of the present invention to provide a non-ferrous metal oxide-ceramic composite poweder suitable for production of a functional multicomponent composite product having a sufficiently homogeneous microstructure.

Another object is to provide a method of economically manufacturing the metal oxide-ceramic composite powder described above.

Acccording to a first aspect of the present invention, there is provided a metal oxide-ceramic powder, for use in the manufacture of a sintered ceramic material, as defined in Claim 1 appended hereto. In a second aspect, the present invention provides a method of manufacturing such a material as defined in Claim 10 appended hereto.

Preferred embodiments of both aspects of the invention are defined in the sub-claims, also appended hereto.

The non-ferrous metal oxide-ceramic composite powder according to the present invention can be provided by firmly bonding crystals of a reacted and precipitated non-ferrous metal oxide to the surface of fine particles of a ceramic material according to a process similar to a plating process, thereby completely coating the surface of the fine particles of the ceramic material with the deposited non-ferrous metal oxide. When the metal oxide-ceramic composite powder thus obtained is sintered by application of heat, the heat is efficiently transmitted from the non-ferrous metal oxide coating into the ceramic material, the metal oxide coating of each particle remaining around the ceramic material until both are completely molten. As a result, the non-ferrous metal oxide component and the ceramic component are blended to form a homogeneous solid solution.

The non-ferrous metal oxide-ceramic composite powder of the present invention has a variety of industrial applications as a material of industrial products. For example, a composite powder according to the present invention can be used as a material for magnetic memories, electronic parts such as insulating elements, semiconductor elements, heat generating elements, thermistors, varistors, dielectric elements, pyroelectric elements, piezoelectric elements, photoelectric elements, photomagnetic elements and the like or for electrical parts, paint pigments, corrosion resistive members, mechanical parts and magnetic fluids.

According to a preferred form of the present invention, there is provided a non-ferrous metal oxide-ceramic composite powder in which a non-ferrous metal oxide is firmly bonded to and coats the surface of fine particles of a ceramic material, characterised in that the powder is produced by the steps of bringing an aqueous solution of one or more non-ferrous metal chloride(s) into contact with many pieces or pellets of a metal exhibiting magnetic properties in the presence of a magnetic field to turn the non-ferrous metal chloride (Ni- Co-, Ba- Al-, Si-, Cu-, Ti-, Cr-, Ge-, Mg-, Sn-, Mn-, Mo-, Cd-, etc. chloride) solution into an aqueous solution of a complex ion, mixing this complex ion solution with an aqueous solution of one or more non-ferrous metal chloride(s) containing many fine particles of a ceramic material to obtain a composite aqueous solution, mixing an aqueous solution of caustic soda with the composite aqueous solution to thereby cause deposition of a non-ferrous metal oxide on the surface of the fine particles of ceramic material, and rinsing and drying the resulting fine particles of powder.

According to the method described above, a non-ferrous metal oxide coating having a very high purity can be firmly bonded to the surface of fine particles of a ceramic material in an efficient and relatively simple manner. Therefore, a high purity non-ferrous metal oxide-ceramic composite powder is very simply and economically produced.

Fine ceramic particles preferably used in the present invention includes those of oxides containing a metallic element or a semimetallic element, such as, zirconia ($ZrO_2$), zircon ($ZrSiO_4$), silicon dioxide ($SiO_2$), alumina ($Al_2O_3$), cobalt oxide, titanium oxide, barium oxide and boron oxide. Other semimetallic and/or nonmetallic elements such as Se, Te, As, P, and others may also be used. Fine particles and compounds such as nitrides including silicon nitride, or carbides including silicon carbide and mixtures thereof may also be used.

When a mixture of non-ferrous metal chlorides is used, a film containing a mixed oxide of the non-ferrous metal components such as cobalt, barium, or titanium can be formed on the surface of the fine particles of ceramic material. The composition and thickness of the film of non-ferrous mixed metal oxide formed is substantially identical and adjusting the proportion of the non-ferrous metal chlorides in solution determines the film composition.

It is considered that the metallic species present in the complex ion are deposited on the surface of the fine particles of ceramic material, however metallic species from the metal chloride solution added with the ceramic particles can also be deposited. Preferably, the same non-ferrous metal or metals are present in the metal chloride solution, which provides the aqueous solution of a complex ion, as are present in the metal chloride solution that contains the ceramic material. However this need not be so and, where the nonmetallic species are different in both chloride solutions, metallic species derived from both solutions may be deposited on the ceramic particles.

Other objects and features of the present invention will become apparent from the following description.

BRIEF DESCRIPTION OF THE DRAWING

The Figure is a schematic representation of the process of the invention.

First, referring to the left side of the process flow chart representation, at least one magnet having a strong magnetic force is placed in a vessel containing an agueous solution of a non-ferrous chloride or non-ferrous metal chloride hydrate having a concentration of about 5 to 35%, so as to establish a magnetic field. As the metal chloride is dissolved in water, cationic and anionic species are formed into the solution, which, thus, can behave as an electrolyte.

Many pieces of a magnetic material, for example, iron pellets having a grain size of about 0.1 to 4 mm are immersed in the aqueous non-ferrous metal chloride solution and the solution is thoroughly agitated. Then, the solution is filtered to obtain an aqueous solution of a complex ion.

In the above steps, the aqueous non-ferrous metal chloride solution is brought into contact with the magnetized iron pellets in the vessel. Therefore, many cathodes and anodes are formed as a result of electrolytic ion exchange, and hydrogen ions which are attracted to the cathodes are discharged as hydrogen gas. Thus, the complex ion solution contains stabilized anions and cations.

The magnetic material may comprise iron, nickel, cobalt, chromium, manganese or any magnetizable metal or alloy which may be sufficiently magnetized to provide an electric potential difference between the magnet and the magnetic material. The material may be supplied as pellets, balls or any other shaped particle of sufficient size to ease removal from the solution after the complex ion is formed.

The metal chlorides and hydrates thereof usable with the present invention may include various non-ferrous metals. Those usable, among others, are:

| | | |
|---|---|---|
| $AlCl_3 \cdot 6H_2O$ | $MgCl_2 \cdot 4H_2O$ | $TeCl_4$ |
| $BaCl_2 \cdot 2H_2O$ | $MoCl_5$ | $TlCl$ |
| $BeCl_2$ | $NiCl_2 \cdot 6H_2O$ | $TiCl_4$ |
| $CrCl_3 \cdot 6H_2O$ | $PtCl_4 \cdot 6H_2O$ | $PoCl_2$ |
| $CoCl_2 \cdot 6H_2O$ | $SiCl_4$ | $YCl_3 \cdot 6H_2O$ |
| $CuCl_2 \cdot 2H_2O$ | $AgCl$ | $ZnCl_2$ |
| $CdCl_2 \cdot 2\,1/2H_2O$ | $SrCl_2 \cdot 6H_2O$ | $ZrCl_4$ |
| $GeCl_4$ | $SnCl_2 \cdot 2H_2O$ | |
| $MnCl_2 \cdot 4H_2O$ | $TaCl_5$ | |

These non-ferrous chlorides form complex ions as described above. Exemplary of such complex ions

are $(Ni_2Cl_3)^{+1}$, $(Ni_2Cl_4)^{+2}$, $(Al_3Cl_7)^{+2}$, $(Cu_3Cl_4)^{+2}$, $(Sr_2Cl_3)^{+1}$, $(Cr_2Cl_5)^{+1}$, etc.

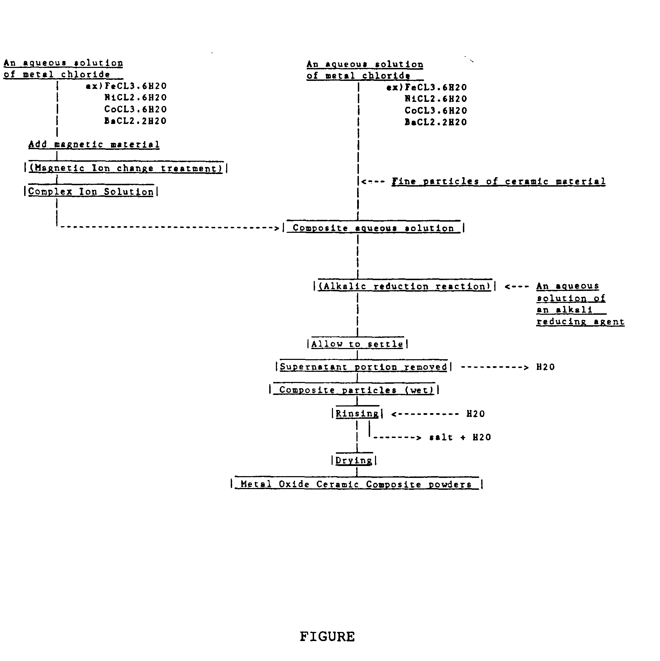

Referring to the right side of the process flow chart of Figure 1, a second aqueous solution of a non-ferrous metal chloride having a concentration of about 5 to 35% and containing fine particles of a ceramic material having a grain size distribution of about 0.05 microns to several mm, preferably, 0.05 to 20 microns, is separately prepared. In a preferred form of the process, the second chloride solution has substantially the same composition as the first solution and both solutions can be made up as one at the beginning of the procedure. The complex ion solution is mixed with this second non-ferrous metal chloride solution in a proportion of about 30 to 50% of the total volume. The non-ferrous metal chloride or hydrate used to make up the second solution may be the same as or different from the non-ferrous metal chloride or hydrate in the complex ion solution. The mixture is thoroughly agitated to provide a composite aqueous solution. This composite aqueous solution is acidic and contains $Cl^{-1}$ ions.

Then an aqueous solution of an alkaline agent, such as caustic soda having a concentration of about 30% is mixed with the composite aqueous solution containing the fine ceramic particles. In this step, non-ferrous metal oxide is substantially uniformly deposited on the surface of the fine ceramic particles. The remainder is an aqueous solution of NaCl.

The non-ferrous metal oxide-ceramic composite particles are then allowed to settle, and the supernatant portion of the solution is discarded. Alternatively, water is removed by centrifugal separation to leave the composite particles. Then, water is added to the particles to clean out any occluded aqueous solution of NaCl on the composite particles. Thereafter, the remaining water is removed by evaporation, and the solids dried to provide the non-ferrous metal oxide-ceramic composite particles in which the non-ferrous metal oxide crystals of high purity are deposited on the surface of the fine ceramic particles.

The non-ferrous metal oxide is substantially uniformly deposited on the surface of each of the ceramic particles. The grain size (distribution) of the composite particles is about 0.1 to 25 micron when the original grain size of the fine ceramic particles is about 0.05 to 20 micron. Also, the non-ferrous metal oxide is firmly bonded to the surface of the fine ceramic particles and is not stripped off even by impartation of mechanical friction or impact. Such a strong bond is attained by plating-like ionic bonding of the non-ferrous metal oxide to the surface of the fine ceramic particles.

When non-ferrous metal oxide-ceramic composite particles in accordance with the present invention are sintered together with another metal, they become dispersed substantially uniformly in the sintered product.

Also, when the inventive non-ferrous metal oxide-ceramic composite particles are melted at a high temperature and then cooled to solidify, a solid solution is obtained in which the non-ferrous metal oxide component and the ceramic component are homogeneously mixed. This solid solution can be expected to possess excellent characteristics suitable to form various kinds of functional elements such as insulating elements, semiconductor elements, heat generating elements and heat-sensitive elements.

The Figure illustrates the described steps for preparing the composite material of the present invention.

The invention is not limited to the listed compounds and other non-ferrous metal chlorides or hydrates are usable with the present invention. Also, mixed non-ferrous metal oxides may be deposited on the ceramic particles. For example, compounds such as Ni Al Cr Ox; Ni Al Ox; Ni Cr Ox; Ni Cr B Ox; Ba Ti Ox; Ba Ti Cu Ox; Cu Ba Y Ox and others may be produced by the same process.

Examples of the multi-component composite compositions which can be formed are given below:

1) Ni-series:

| a) | | b) | |
|---|---|---|---|
| | Ni•Co•Ox | | Ni•Co•B•Ox |
| | Ni•Cr•Ox | | Ni•Cr•B•Ox |
| | Ni•Zr•Ox | | Ni•Zr•B•Ox |
| | Ni•Cu•Ox | | Ni•Cu•B•Ox |
| | Ni•Si•Ox | | Ni•Si•B•Ox |
| | Ni•Ti•Ox | | Ni•Ti•B•Ox |
| | Ni•AL•Ox | | Ni•AL•B•Ox |
| | Ni•Mn•Ox | | Ni•Mn•B•Ox |
| | Ni•Mg•Ox | | Ni•Mg•B•Ox |
| | Ni•Ba•Ox | | Ni•Ba•B•Ox |
| | etc. | | etc. |

As the source of the element B, $Na_2B_4O_7 \cdot 10H_2O$ is used.

2) Ba-series:

| | |
|---|---|
| Ba•Cu•Ox | Y•Ba•Ca•Ox |
| Ba•La•Ox | Y•Ba•La•Ox |
| Ba•Ti•Ox | Y•Ba•Ti•Ox |
| Ba•Zr•Ox | Y•Ba•Zr•Ox |
| Ba•AL•Ox | Y•Ba•AL•Ox |
| etc. | etc. |

3) Other examples:

Y•Ba•Ti•Cu•Ox

Y•Ba•Ti•Zn•Ox

Y•Ba•Zr•Cu•Ox

Y•Ba•Zr•Pb•Ox

Each of the elements in the composite powders comes from an aqueous solution of each of the corresponding chlorides, such as $NiCl_2.6H_2O$; $CrCl_2.6H_2O$; $CuCl_2.2H_2O$; $BaCl.2H_2O$.

Up to 20 or more metal chloride or chloride hydrates, or combinations thereof, can be combined to form composite powders with unique properties. Thus, particles having a uniform distribution of various non-ferrous metals in proportion to their presence in solution can be produced according to the present invention. For example, if 50% by wt. nickel, 30% aluminum and 20% chromium are present in solution, the film coating will contain the same proportion of metal oxides. Another combination would be 60% Ni, 30% A1 and 10% Cr, which has been found to act as a positive temperature coefficient (PTC) resistor. This custom processing provides non-ferrous metal ceramic composite materials with unique properties, which have application in many industries, not only in the semiconductor field.

It will be understood from the foregoing description that the composite powder according to the present invention can be effectively used as a material for manufacturing a variety of secondary industrial products and can be expected to exhibit excellent characteristics over the prior art, especially when used as a material for manufacturing insulating elements, semiconductor elements, etc.

**Claims**

1. A metal oxide-ceramic composite powder, for use in the manufacture of a sintered ceramic material, comprising fine particles of a ceramic material, characterised in that a crystalline film, comprising a non-ferrous metal oxide, is ionically bonded to the surface of each fine particle, coating the entire surface of the particle.

2. A metal oxide ceramic composite powder as claimed in claim 1, wherein the oxide includes a plurality of non-ferrous metals.

3. A metal oxide ceramic composite powder as claimed in claim 1 or claim 2, wherein the oxide further includes at least one semi-metallic element.

4. A metal oxide ceramic material as claimed in any of claims 1-3 wherein the oxide includes nickel, cobalt, barium, aluminium, silicon, copper, titanium, germanium, magnesium, chromium, tin, manganese, molybenum, cadmium, beryllium, tantalum, silver, zirconium, zinc, yttrium, polonium, tellurium, strontium or platinum.

5. A metal oxide ceramic composite powder as claimed in any of the preceding claims, wherein the fine particles of ceramic material are formed from zircon, zirconia, silicon dioxide, alumina, cobalt oxide, titanium oxide, barium oxide, boron oxide, or an oxide, a nitride or a carbide of a metallic or semi-metallic element.

6. A metal oxide ceramic composite powder as claimed in any of the preceding claims, wherein the particle size of the metal oxide ceramic composite powder is in the range of from 0.05 to 25 microns and the fine ceramic particles therein have an average particle size of from 0.05 to 20 microns.

7. A metal oxide ceramic composite powder as claimed in any of the preceding claims, wherein the oxide is bonded to the surface of each particle by precipitation in a reduction reaction of a complex ion solution.

8. A metal oxide ceramic composite powder as claimed in claim 7, wherein the non-ferrous metals or semi-metallic elements in the non-ferrous oxide film are present in proportion to their respective concentrations in the complex ion solution.

9. A metal oxide ceramic composite powder as claimed in any of claims 3-8, wherein the semi-metallic element is cobalt, barium or titanium.

10. A method of manufacturing a metal oxide ceramic composite powder comprising the steps of:
immersing pieces of magnetic metal in an aqueous solution of a non-ferrous metal chloride or chloride hydrate in the presence of a magnetic field to provide a complex ion solution;
adding fine particles of a ceramic material and said complex ion solution to an aqueous solution of a non-ferrous metal chloride or chloride hydrate to obtain a composite aguEous solution and;
adding an aqueous solution of alkaline agent to said composite aqueous solution, to cause a reaction resulting in the formation of a film of crystalline non-ferrous metal oxide covering the entire surface of the fine ceramic particles, to provide non-ferrous metal oxide-ceramic composite particles.

11. A method as claimed in claim 10, wherein the fine particles of ceramic material are formed from zircon, zirconia, silicon dioxide, alumina, cobalt oxide, titanium oxide, barium oxide, boron oxide or, an oxide, a nitride or a carbide of a metallic or a semi-metallic element.

12. A method as claimed in either claim 10 or claim 11, wherein at least one of the non-ferrous metal chloride solutions includes a plurality of non-ferrous metallic species, which are precipitated in the oxide film on the ceramic particles.

13. A method as claimed in any of claims 10-12, wherein at least one of the non-ferrous metal chloride solutions includes at least one semi-metallic species, which is precipitated in the oxide film on the ceramic particles.

14. A method as claimed in any of claims 10-13, wherein the non-ferrous metals or semi-metallic elements deposited in the non-ferrous metal oxide film, are present in the film in proportion to their respective concentrations in the complex ion solution.

15. A method as claimed in any of claims 10-14, wherein non-ferrous metals or semi-metallic elements deposited in the non-ferrous metal oxide film are present in one or both of the complex ion solution and chloride solution which provide the composite aqueous solution, prior to their mixing and subsequent reaction.

16. A method as claimed in claim 14 and 15, wherein the chloride solution used to provide the complex ion solution is of substantially the same composition as the chloride solution admixed with the complex ion solution.

17. A method as claimed in either of claims 12 and 13, wherein the non-ferrous metallic species or semi-metallic species is nickel, cobalt, barium, aluminium, silicon, copper, titanium, germanium, magnesium, chromium, tin, manganese, molybdenum, cadmium, beryllium, tantalum, silver, zirconium, zinc, yttrium, polonium, tellurium, strontium or platinum.

18. A method as claimed in any of claims 10-17, wherein the fine ceramic particles have an average particle size of from 0.05 to 20 microns.

19. A method as claimed in any of claims 10-18, wherein the complex ion solution comprises between 30 to 50% of the total volume of the composite aqueous solution.

20. A method as claimed in any of claims 10-19, wherein the aqueous solutions of non-ferrous metal chloride have a concentration in the range of from 5 to 35%.

21. A method as claimed in any of claims 10-20, wherein the alkaline agent is caustic soda having a concentration of about 30%.

22. A method as claimed in any of claims 10-21 further comprising the steps of separating the non-ferrous metal oxide ceramic composite particles from a remaining solution, disposing of a resulting supernatant liquid, rinsing the separated particles with water and drying the non-ferrous metal oxide ceramic composite particles.

EP 0 473 855 A1

```
An aqueous solution                          An aqueous solution
of metal chloride                            of metal chloride
    |       ex)FeCL3.6H20                        |       ex)FeCL3.6H20
    |          NiCL2.6H20                         |          NiCL2.6H20
    |          CoCL3.6H20                         |          CoCL3.6H20
    |          BaCL2.2H20                         |          BaCL2.2H20
    |                                             |
Add magnetic material                            |
|(Magnetic Ion change treatment)|                |<--- Fine particles of ceramic material
|Complex Ion Solution|                           |
    |                                             |
    |------------------------------->| Composite aqueous solution |
                                                  |
                                         |(Alkalic reduction reaction)| <--- An aqueous
                                                  |                           solution of
                                                  |                           an alkali
                                                  |                           reducing agent
                                         |Allow to settle|
                                         |Supernatant portion removed| ----------> H20
                                         | Composite particles (wet)|
                                              |Rinsing| <---------- H20
                                                  |  |-------> salt + H20
                                              |Drying|
                                         | Metal Oxide Ceramic Composite powders |
```

**FIGURE**

8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 225 176 (OKURA TECHNO-RESEARCH CO) <br> * the whole document * <br> – – – | 1-8,10-22 | C 04 B 35/00 <br> C 04 B 41/50 |
| Y | CHEMICAL ABSTRACTS, vol. 87, no. 10, 05 September 1977 Columbus, Ohio, USA page 87; right-hand column; ref. no. 69886G <br> & JP-A-5221299 (TOHO GANRYO KOGYO ET AL) 17.2.77 <br> * abstract * <br> – – – | 1-8,10-22 | |
| D,Y | EP-A-0 221 765 (OKURA TECHNO-RESEARCH CO) <br> * the whole document * <br> – – – | 1-8,10-22 | |
| A | PATENT ABSTRACTS OF JAPAN vol. 13, no. 111 (C-577)(3459) 16 March 1989, <br> & JP-A-63 285118 (TEIKOKU KAKO KK) 22 November 1988, <br> * the whole document * <br> – – – – – | 1-8,10-22 | |

| | TECHNICAL FIELDS SEARCHED (Int. Cl.5) |
|---|---|
| | C 04 B |

The present search report has been drawn up for all claims

| Place of search | Date of completion of search | Examiner |
|---|---|---|
| Berlin | 05 December 91 | KUEHNE H C |